# EUROPEAN PATENT APPLICATION

(11) **EP 3 696 380 A1**
(43) Date of publication of application: **19.08.2020**
(21) Application number: 20151643.2
(22) Date of filing: 14.01.2020
(51) Int. Cl.: F01D 25/28, F01D 5/30, F01D 5/32

(54) **ADAPTER FOR POSITIONING A MACHINING TOOL BETWEEN TWO AEROFOILS**

(30) Priority: 04.02.2019 GB 201901482
(71) Applicant: Rolls-Royce plc, London N1 9FX (GB)
(72) Inventor: Coles, David, Derby, Derbyshire DE24 8BJ (GB); Traub, Benjamin, Derby, Derbyshire DE24 8BJ (GB)
(74) Representative: Rolls-Royce plc

(57) **Abstract**

An adapter, configured to assist in the machining of a fixing located in a region between two aerofoils that are removable parts of an apparatus, the adapter comprising: first and second engagement surfaces, configured to engage with the respective surfaces of the two aerofoils facing the region between the aerofoils and determine the position of the adapter relative to the aerofoils in a direction extending between the two aerofoils; and a connector, configured to connect to a machining tool and determine the position of the machining tool relative to the adaptor.

## Description

The present disclosure relates to systems for servicing apparatus such as gas turbine engines. In order to service such apparatus, it may be necessary to disassemble one or more components from the apparatus. For example, in a gas turbine engine, it may be desirable to disassemble part of a compressor module. Within such a compressor module, plural compressor blades may be secured to a mount within the compressor module. As part of the arrangement to securely fix the compressor blades, lock-nuts, colloquially known as pagoda nuts, may be provided between an adjacent pair of compressor blades and secured to the mount on which the compressor blades are secured.

During servicing, the lock-nuts may be removed. However, the lock-nuts are known to seize regularly during service operation. This may prevent removal by hand when the engine module is brought in for servicing, such as during repair and overhaul processes. When this occurs, it is necessary to cut the bolts out using a machining process. However, this may require skilled technicians to operate the machinery because it is essential to accurately position the bolt of the lock-nut relative to the machining tool and to machine only to the required depth. Any error may result in damage to the compressor blades or the compressor drum, resulting in scrapping of the parts and significant cost. The process is especially difficult because the machining is performed blind, requiring operator judgement regarding the depth of machining required.

Such machining processes may also require expensive and large equipment. The process may also take a considerable amount of time, taking into account the difficulty of the machining process and the queuing time that may be incurred for access to the machining tool.

It is therefore desirable to provide an improved system for removing fixings, such as lock-nuts in such a scenario.

According to a first aspect of the disclosure there is provided an adapter, configured to assist in the machining of a fixing located in a region between two aerofoils that are removable parts of an apparatus, the adapter comprising first and second engagement surfaces, each configured to engage with a respective surface of the two aerofoils facing the region between the aerofoils and determine the position of the adapter relative to the aerofoils in a direction extending between the two aerofoils; and a connector, configured to connect to a machining tool and determine the position of the machining tool relative to the adapter.

In an arrangement, each of the engagement surfaces may be a continuous surface having a shape that matches the shape of the surface of the aerofoil with which it engages.

In an arrangement, the adapter may further comprise at least one protrusion, configured to engage with at least one of an edge of one of the aerofoils or an edge of a platform on which the aerofoil is mounted in order to determine the position of the adapter relative to the aerofoils in a second direction, perpendicular to the direction extending between the two aerofoils.

In an arrangement, the adapter may be configured to be used with an electro-discharge machining tool having an electrode used to remove material from a workpiece by electrical discharge between the electrode and the workpiece.

In an arrangement, the adapter may comprise a channel extending from the connector to an opening at the opposite end of the adapter from the connector; and the channel may be configured such that, when the adapter is located between the two aerofoils and connected to the electro-discharge machining tool, the electrode of the electro-discharge machining tool can extend through the channel and approach the fixing to be machined.

In an arrangement, the channel may be configured to enable a fluid electrolyte to flow between the opening and the electro-discharge machining tool.

In an arrangement, at least one section of the channel may be elliptical in cross-section.

In an arrangement, the channel may further comprise an electrode guide, configured to restrict the movement of the electrode in a direction perpendicular to the length of the channel.

In an arrangement, the electrode guide may comprise a plate extending across the channel and having a first aperture, configured to permit the electrode to extend through the first aperture but prevent movement of the electrode in a direction perpendicular to the length of the channel, and at least one second aperture, distinct from the first aperture, configured to permit fluid to pass between sections of the channel on respective sides of the plate.

In an arrangement, the first aperture is hexagonal in cross-section.

In an arrangement, the adapter may further comprise a seal provided around the opening at the opposite end of the adapter from the connector, configured to retain a fluid in a space between the opening at the opposite end of the adapter from the connector and the fixing to be machined.

In an arrangement, the adapter may comprise a recess around the opening, configured to releasably hold the seal.

In an arrangement, the adapter is formed by additive manufacturing.

In an arrangement, the adapter is configured to be located between two compressor blades of a compressor stage in a gas turbine engine.

According to a second aspect of the disclosure there is provided a process of servicing a gas turbine engine, comprising a step of using the adapter disclosed above to assist in the machining of a fixing located between two aerofoils in the gas turbine engine.

According to a third aspect of the disclosure there is provided a method of forming an adapter disclosed above for use in servicing a specific gas turbine engine, comprising analysing a design for the specific gas turbine engine; preparing a design of an adapter such that the first and second engagement surfaces are configured to engage with a pair of aerofoils within the gas turbine engine such that the adapter fits at a desired location between the aerofoils to permit machining of a fixing located between the aerofoils; and forming an adapter according to the design.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other. Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.
The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figures 4 and 5 depict an arrangement for mounting compressor blades in a gas turbine engine;
Figures 6 and 7 depict and adapter located between a pair of compressor blades;
Figures 8 and 9 depict the adapter of Figures 6 and 7 in a cross-section through the channel within the adapter; and
Figure 10 depicts a further cross-section through the adapter of Figures 6 and 7.

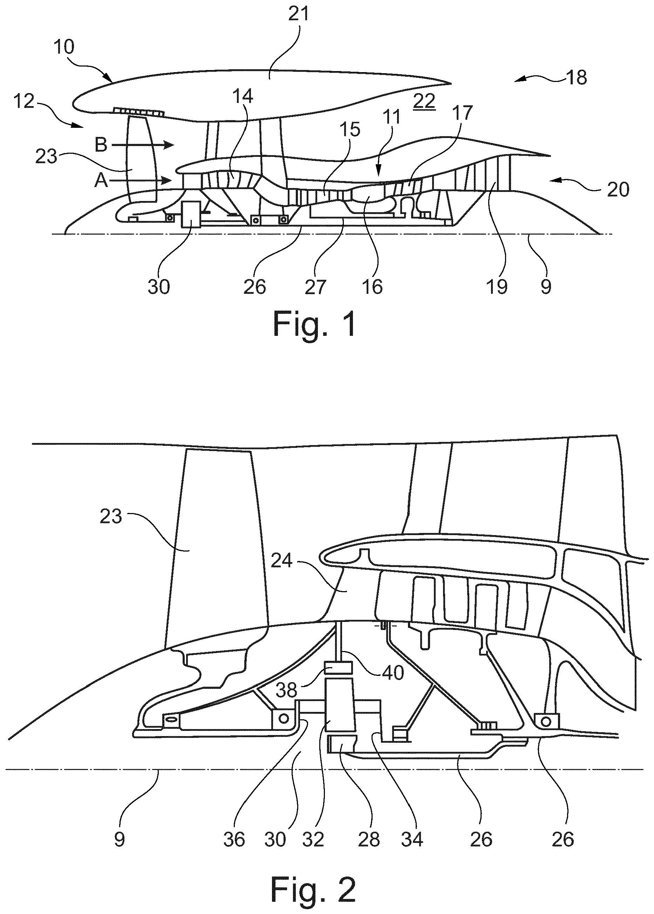

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

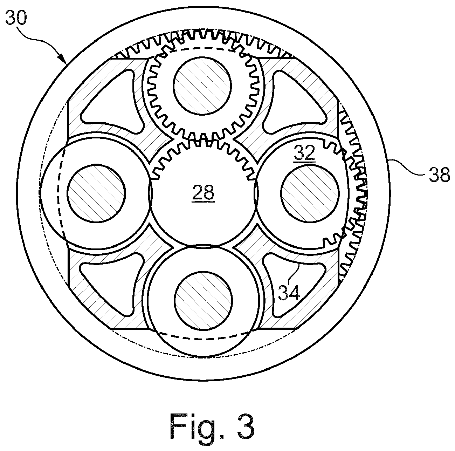

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

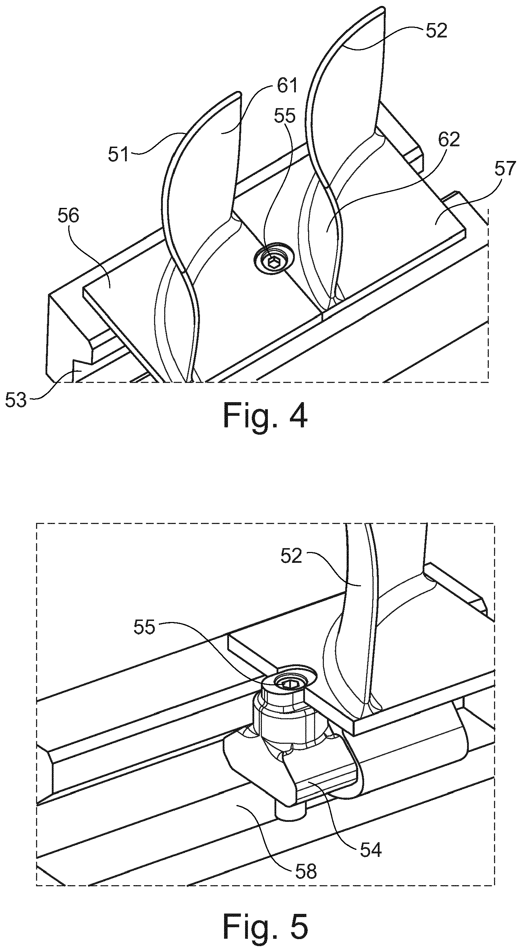

The present disclosure relates to a system that enables the machining of a fixing that is located in the region between two aerofoils, for example in order to assist the removal of the aerofoils from the remainder of an apparatus. Figures 4 and 5 depict an example of such a scenario. As shown, first and second aerofoils 51, 52, which in the arrangement shown are compressor blades within a compressor module of a gas turbine engine, are held within a circumferential dovetail slot 53. A lock-nut 54, secured by a bolt 55, is provided within the dovetail slot 53 between the pairs of compressor blades 51, 52. When tightened, the combination of the lock-nut 54 and bolt 55 causes the lock-nut 54 to engage with the dovetail slot 53, preventing movement of the compressor blades 51, 52 along the dovetail slot 53, namely preventing rotation of the compressor blades 51, 52 about the compressor drum axis relative to the compressor drum.

As noted above, the lock-nuts may seize during service operation, with the result that it becomes necessary to machine the bolt 55 in order to release the lock-nut. This process requires accurate machining in order to avoid damaging either the compressor blades 51, 52, including the base sections 56, 57 of the compressor blades 51, 52 on which the respective aerofoils are formed, or the dovetail slot 53. In particular, if machining of the bolt 55 extends too deeply, the bottom surface 58 of the dovetail slot 53 may be damaged.

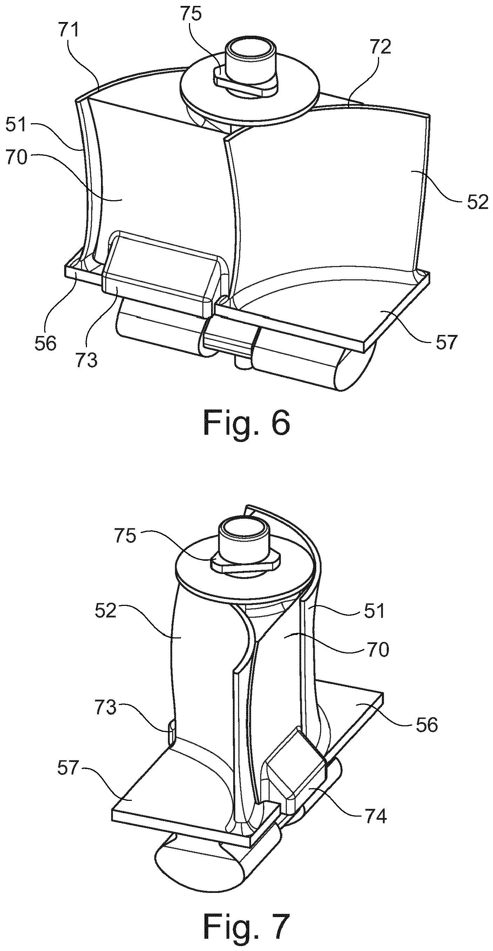

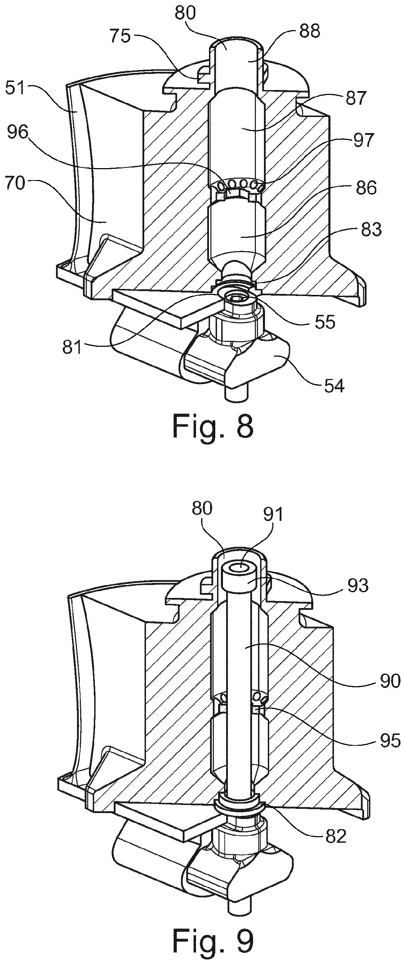

The present disclosure provides an adapter that is configured to assist a machining process to remove a fixing, such as the lock-nut 54, that is located in a region between two aerofoils such as the compressor blades 51, 52 shown in Figures 4 and 5. Figures 6 and 7 depict such an adapter 70 in use between two compressor blades 51, 52. Figures 8 and 9 depict further detail of the adapter 60, depicting cross-sections through the adapter 70, as discussed in more detail below.

The adapter 70 has engagement surfaces 71, 72 that engage with the surfaces 61, 62 of the aerofoils of the compressor blades 51, 52. In particular, the engagement surfaces 71, 72 are configured such, that when the adapter 70 is positioned between the compressor blades 51, 52, the contact between the engagement surfaces 71, 72 and the surfaces 61, 62 of the aerofoils of the compressor blades 51, 52 fixes the location of the adapter 70 relative to the compressor blades 51, 52, at least in a direction extending between the two compressor blades 51, 52, namely in a direction parallel to the dovetail slot 53 in the example show. This may ensure that the adapter 70 is in a fixed position relative to the lock-nut 54 and/or bolt 55. It may therefore be used to accurately guide a machining tool to machine the lock-nut 54 and/or bolt 55.

In an arrangement, the body of the adapter 70 may be designed to completely fill the space between the pair of compressor blades 51, 52. For example, each of the engagement surfaces 71, 72 may form a continuous surface having a shape that matches the surface 61, 62 of the aerofoils of the compressor blades 51, 52 with which it engages.

As shown in Figures 6 and 7, the adapter 70 may also include protrusions 73, 74 that engage with the base sections 56, 57 of the compressor blades 51, 52 on which the aerofoils are formed. Such protrusions may resist movement on the adapter 70 relative to the compressor blades 51, 52 in a direction perpendicular to the direction extending between the compressor blades 51, 52. In such an arrangement, the combination of the engagement surfaces 71, 72 and the protrusions 73, 74 may combine to ensure that there is no movement of the adapter 70 relative to the compressor blades 51, 52 when it is located between the compressor blades.

The adapter 70 further includes a connector 75 that is configured to connect to a machining tool. The connector is configured to secure the position of the machining tool to be used relative to the adapter 70 and therefore to secure the positon of the machining tool relative to the lock-nut 54 and/or bolt 55 to be machined.

The form of the connector 75 may be determined by the securing mechanism of the machining tool to be used. In the example shown in Figures 6 and 7, the connector 75 includes a triangular shaped engagement mechanism that is designed to be pressed into a triangular shaped slot in the machining tool and turned to be secured. Other forms of connector may readily be used, depending on the machining tool to be used.

In an arrangement, the adapter may be configured to be used with an electro-discharge machining tool (EDM tool). During electro-discharge machining, material is removed from a work piece by electrical discharge between the work piece and an electrode that is moved towards the workpiece in the presence of a fluid electrolyte. The adapter 70 may be configured to facilitate such a machining process.

Figures 8 and 9 depict the adapter 70 of Figures 6 and 7 in cross-section to explain an example of an adapter 70 being configured for use with electro-discharge machining. A channel 80 is provided that extends from the connector 75 to an opening 81 that is at the opposite end of the adapter 70 from the connector 75. Figure 8 depicts only the main body of the adapter 70 in a cross-section through the channel 80. Figure 9 depicts the same cross-section but with additional elements of the system in place. In particular, Figure 9 shows the positon of an electrode 90 of the electro-discharge machining tool within the adapter 70 in use.

As shown, the position of the channel 80 within the adapter 70 is configured such that, when the adapter 70 is located between the compressor blades 51, 52 the electrode 90 is aligned with the lock-nut 54 and/or the bolt 55. Accordingly, the electrode 90 may be advance during electro-discharge machining in order to machine the lock-nut 54 and/or the bolt 55.

The adapter 70 may also be configured to enable the provision of a flow of fluid electrolyte from the electro-discharge machining tool to the region between the electrode 90 and the workpiece to be machined, in this case the bolt 55 and/or the lock-nut 54. In the arrangement depicted in Figures 8 and 9, the adapter 70 is configured to be used with an electro-discharge machining tool that uses a hollow electrode 90. Accordingly, the electrode 90 includes a channel 91 within the electrode which may be used to supply fluid electrolyte to the space between the electrode 90 and the workpiece to be machined.

The channel 80 of the adapter 70 is configured such that there is space within the channel 80 around the electrode 90. This may be used for fluid electrolyte to flow outside of the electrode 90 from the region between the electrode 90 and the workpiece to be machined back to the connector 75. From there, the electrolyte fluid may be returned back to the electro-discharge machining tool. Accordingly, a flow of fluid electrolyte from the electro-discharge machining tool to the region between the end of the electrode 90 and the workpiece to be machined and back again can be provided.

It should be appreciated that variations of the above-described arrangement may be used. For example, the flow-path described above may be reversed, such that electrolyte is provided through the space between the surface of the channel 80 within the adapter 70 and the outside surface of the electrode 90 and returned to the electro-discharge machining tool through the channel 91 within the electrode 90. Alternatively or additionally, one or both of the supply path and the return path of the fluid electrolyte may be provided to or from the region between the electrode 90 and the workpiece to be machined via a separately provided channel through the adapter 70 or through a different component.

A seal 82 may be provided around the opening 81 that is at the opposite end of the adapter 70 from the connector 75. The seal 82 may surround the region between the end of the electrode 90 and the workpiece to be machined, such as the bolt 55 and/or the lock-nut 54. The seal may be configured to contain the fluid electrolyte in the region, preventing or minimising leakage of the fluid electrolyte. In an arrangement, the seal 82 may be formed from rubber or another resilient material, for example a material that is less stiff than the main body of the adapter 70. The main body of the adapter 70 may include a recess 83 around the opening 81 that is configured to receive and retain the seal 82. The seal 82 may be configured to be replaceable, for example if it is expected that the working life of the seal 82 may be less than that of the main body of the adapter 70.

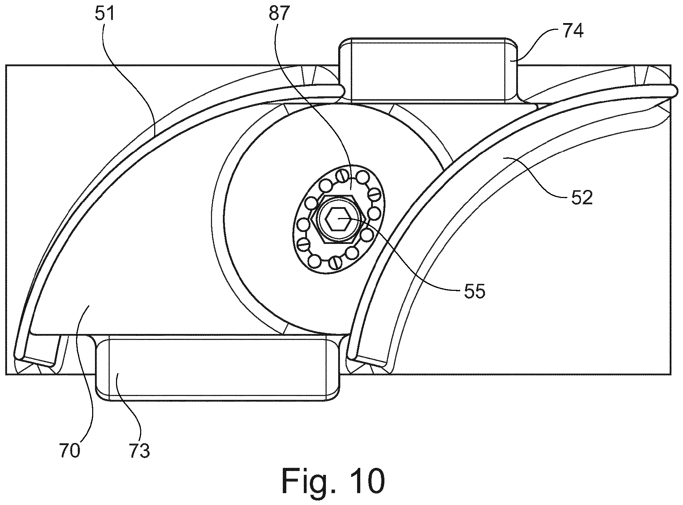

In general, it should be appreciated that the cross-section of the channel 80 through the adapter 70 may have any shape. In an arrangement, at least one section 86, 87 of the channel 80 through the adapter 70 may have an elliptical shape. Such an arrangement may enable a larger cross-sectional area than would be available from, for example, a circular shape, given the limitations of the space available between the compressor blades 51, 52. This may facilitate flow of the fluid electrolyte. This is illustrated in the Figure 10, which represents a cross-section through a section 87 of the channel 80 through an adapter 70 located between compressor blades 51, 52.

It will be appreciated that the restriction on space only applies to parts of the adapter between the compressor blades 51, 52. Accordingly, the adapter 70 may be configured to extend beyond the ends of the compressor blades 51, 52. For example the connector 75 may be provided at a sufficient distance from the end of the adapter 70 that is configured to be adjacent the workpiece to be machined that there is no restriction on the size of the connector 75. Such an arrangement is depicted in Figures 6 and 7 for example.

It may be appreciated, therefore, that the restrictions on the cross-section of the channel 80 are also reduced in such a region. Accordingly, the channel 80 may include at least one section 88, for example, in a region of the connector 75, in which the cross-section is larger than the cross-section of the channel 80 of the sections 86, 87 that are configured to be located between the compressor blades 51, 52. Such a section 88 may, for convenience, have a circular shape. This may enable the use of an electrode 90 having a section 93 that is wider at the point at which it connects to the remainder of the electro-discharge machining tool.

In an arrangement, as depicted in Figures 8 and 9, the adapter 70 may include an electrode guide 95 within the channel 80. The electrode guide 95 may be configured to restrict movement of the electrode in a direction perpendicular to the length of the channel 80. This may assist in ensuring correct alignment of the electrode 90 when it extends from the electro-discharge machining tool, improving accuracy of the machining of the bolt 55 and/or lock-nut 54.

In the arrangement shown in Figures 8 and 9, the electrode guide 95 is formed as a plate extending across the channel 80. The plate includes a first aperture 96 that is configured to permit the electrode 90 to pass through. The first aperture 96 is configured such that, although the electrode 90 can move through the aperture 96 in a direction parallel to the length of the channel 80, the electrode 90 is constrained such that it cannot move in a direction perpendicular to the length of the channel 80.

As shown in Figures 8 and 9, the first aperture 96 may have a hexagonal cross-section. Such an arrangement constrains the movement of the electrode 90 in a direction perpendicular to the length of the channel 80 but limits the area of contact between the surfaces of the first aperture 96 and the electrode 90. This may limit the friction between the electrode 90 and the electrode guide 95. It should be appreciated that other shapes of the first aperture 96 may be used, including a circular aperture, for example if the material of the main body of the adapter 70 and/or the electrode 90 is such that the friction between them is sufficiently low in any case.

In the arrangement shown in Figures 8 and 9, the plate forming the electrode guide 95 also includes a plurality of second apertures 97 that extend through the plate and permit flow of the fluid electrolyte between the sections 86, 87 of the channel 80 on either side of the electrode guide 95. It should be appreciated that alternative arrangements for ensuring fluid flow between the sections 86, 87 of the channel 80 of either side of the electrode guide 95 may be provided including, for example, separate sections of channel that bypass the electrode guide 95.

The adapter 70 of the present disclosure may be formed by any suitable process. For example, the adapter 70 may be formed by additive manufacturing, enabling conveniently the formation of an adapter 70 with the features discussed above. Such an adapter 70 may be specifically designed and manufactured for use with a particular design of gas turbine engine and/or particular set of compressor blades, 51 52 within a specific gas turning engine.

For example, the design of the compressor blades of a gas turbine engine may be analysed with a computer aided design (CAD) system in order to determine the required shapes of the first and second engagement surfaces 71, 72 in order to precisely fit within the space between the gas turbine blades 51, 52. Such an analysis may be performed in order to generate an electronic design of the adapter 70 required for a particular set of compressor blades within the gas turbine engine. The electronic design prepared accordingly may then be used as the basis for formation of the adapter 70, for example using additive manufacturing.

## Claims

1. An adapter (70), configured to assist in the machining of a fixing (55) located in a region between two aerofoils (51,52) that are removable parts of an apparatus, the adapter comprising:
first and second engagement surfaces (71,72), each configured to engage with a respective surface (61,62) of the two aerofoils facing the region between the aerofoils and determine the position of the adapter (70) relative to the aerofoils in a direction extending between the two aerofoils; and
a connector (75), configured to connect to a machining tool and determine the position of the machining tool relative to the adapter (70).

2. The adapter according to Claim 1, wherein each of the engagement surfaces (71,72) is a continuous surface having a shape that matches the shape of the surface of the aerofoil (51,52) with which it engages.

3. The adapter according to Claim 1 or Claim 2, further comprising at least one protrusion (73,74), configured to engage with at least one of an edge of one of the aerofoils or an edge of a platform (56,57) on which the aerofoil (51,52) is mounted in order to determine the position of the adapter (70) relative to the aerofoils in a second direction, perpendicular to the direction extending between the two aerofoils.

4. The adapter according to any one of Claims 1 to 3, wherein the adapter (70) is configured to be used with an electro-discharge machining tool having an electrode (90) used to remove material from a workpiece by electrical discharge between the electrode and the workpiece.

5. The adapter according to Claim 4, wherein the adapter (70) comprises a channel (80) extending from the connector (75) to an opening (81) at the opposite end of the adapter from the connector; and
the channel (80) is configured such that, when the adapter (70) is located between the two aerofoils (51,52) and connected to the electro-discharge machining tool, the electrode (90) of the electro-discharge machining tool can extend through the channel and approach the fixing (55) to be machined.

6. The adapter according to Claim 5, wherein the channel (80) is configured to enable a fluid electrolyte to flow between the opening (81) and the electro-discharge machining tool.

7. The adapter according to Claim 5 or Claim 6, wherein at least one section (86,87) of the channel (80) is elliptical in cross-section.

8. The adapter according to any one of Claims 5 to 7, wherein the channel (80) further comprises an electrode guide (95), configured to restrict the movement of the electrode (90) in a direction perpendicular to the length of the channel.

9. The adapter according to Claim 8, wherein the electrode guide (95) comprises a plate extending across the channel (80) and having a first aperture (96), configured to permit the electrode (90) to extend through the first aperture but prevent movement of the electrode in a direction perpendicular to the length of the channel, and at least one second aperture (97), distinct from the first aperture, configured to permit fluid to pass between sections (86,87) of the channel on respective sides of the plate.

10. The adapter according to Claim 9, wherein the first aperture (96) is hexagonal in cross-section.

11. The adapter according to any one of Claims 5 to 10, further comprising a seal (82) provided around the opening (81) at the opposite end of the adapter (70) from the connector (75), configured to retain a fluid in a space between the opening at the opposite end of the adapter from the connector and the fixing (55) to be machined.

12. The adapter according to Claim 11, comprising a recess (83) around the opening (81), configured to releasably hold the seal (82).

13. The adapter according to any one of the preceding claims, wherein the adapter (70) is formed by additive manufacturing.

14. The adapter according to any one of the preceding claims, wherein the adapter (70) is configured to be located between two compressor blades (51,52) of a compressor stage in a gas turbine engine.

15. A process of servicing a gas turbine engine, comprising a step of using the adapter (70) of any one of the preceding claims to assist in the machining of a fixing (55) located between two aerofoils (51,52) in the gas turbine engine.

16. A method of forming an adapter (70) according to any one of Claims 1 to 14 for use in servicing a specific gas turbine engine, comprising:
analysing a design for the specific gas turbine engine;
preparing a design of an adapter such that the first and second engagement surfaces (71,72) are configured to engage with a pair of aerofoils (51,52) within the gas turbine engine such that the adapter (70) fits at a desired location between the aerofoils to permit machining of a fixing (55) located between the aerofoils; and
forming an adapter (70) according to the design.
